Europäisches Patentamt

(19) European Patent Office

Office européen des brevets

(11) Veröffentlichungsnummer: **0 092 640**
**B1**

(12) **EUROPÄISCHE PATENTSCHRIFT**

(45) Veröffentlichungstag der Patentschrift:
23.04.86

(51) Int. Cl.⁴: **B 60 K 31/04**

(21) Anmeldenummer: 83100809.9

(22) Anmeldetag: 28.01.83

(54) **Mit einem Gaspedal koppelbarer Stellungsgeber zum Steuern der Fahrgeschwindigkeit eines Kraftfahrzeugs.**

(30) Priorität: 23.04.82 DE 3215167

(43) Veröffentlichungstag der Anmeldung:
02.11.83 Patentblatt 83/44

(45) Bekanntmachung des Hinweises auf die Patenterteilung:
23.04.86 Patentblatt 86/17

(84) Benannte Vertragsstaaten:
DE FR GB IT

(56) Entgegenhaltungen:
DE - A - 2 839 382
DE - A - 2 843 456

(73) Patentinhaber: VDO Adolf Schindling AG,
Gräfstrasse 103, D-6000 Frankfurt/Main (DE)

(72) Erfinder: Sauerschell, Wolfgang, Mauerfeldstrasse 18,
D-6370 Oberursel 5 (DE)
Erfinder: Ruschek, Gerhard, Elsa-Brandström-Strasse 1,
D-6234 Hattersheim (DE)
Erfinder: Mann, Arnold, Im Streitfeld 5,
D-6465 Biebergemünd (DE)

(74) Vertreter: Könekamp, Herbert, Dipl.-Ing., Sodener
Strasse 9, D-6231 Schwalbach (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen mit einem Gaspedal koppelbaren Stellungsgeber zum Steuern der Fahrgeschwindigkeit eines Kraftfahrzeugs nach dem Oberbegriff des Anspruchs 1.

Mit derartigen Stellungsgebern wird ein elektrisches Signal in Abhängigkeit von der Gaspedalstellung erzeugt. Das elektrische Signal wird in einem Vergleicher mit einer Rückführgrösse entsprechend der Drosselklappenstellung verglichen und über einen Regelverstärker einem Stellorgan zugeführt, welches die Drosselklappe nach einer vorgegebenen Charakteristik nach Massgabe der Gaspedalstellung betätigt. Solche Einrichtungen sind auch unter der Bezeichnung E-Gas bekannt. Der Stellungsgeber kann auch zum Regeln der Fahrgeschwindigkeit eines Kraftfahrzeugs eingesetzt werden, wenn das von dem Stellungsgeber abgegebene elektrische Signal mit einer der gewünschten Fahrgeschwindigkeit entsprechenden Führungsgrösse verglichen wird und dieses erste Vergleichssignal dem zweiten Vergleicher, in dem der Vergleich mit der Rückführgrösse durchgeführt wird, zugeleitet wird.

In dem Bestreben, kompakte und zuverlässige Stellungsgeber zu schaffen, ist ein Stellungsgeber der eingangs genannten Gattung bekannt (DE-A-2 843 456), der im wesentlichen aus einem in einem zylindrischen Gehäuse untergebrachten Drehwiderstand besteht. Der Drehwiderstand ist im einzelnen in einer rohrförmigen Halterung mit zwei Abschnitten unterschiedlichen Durchmessers angeordnet, die mit einem Bund zwischen einer Stirnseite des Gehäuses und dem Boden eingespannt werden kann. Die Stellwelle des Drehwiderstands ist aus der zylinderförmigen Halterung, und zwar aus dem Abschnitt kleineren Durchmessers, herausgeführt und steht mit einem glockenförmigen Körper in Verbindung, der in dem hohlzylindrischen Innenraum des Gehäuses drehbar gelagert ist. Hierzu geht der glockenartige Körper an seiner geschlossenen Stirnseite in ein konzentrisches Wellenstück über, das durch eine Öffnung im Gehäuse aus diesem herausragt. An dem Wellenstück ist eine Schwinge mit einem Kugelkopf zur Ankopplung des Gaspedals angebracht. In dem Zwischenraum zwischen dem glockenartigen Körper und der rohrförmigen Halterung sind zwei Rückstellfedern angeordnet, von denen die eine Rückstellfeder mit einem Ende in ein Loch im Bund und mit einem anderen Ende in ein Loch in der Stirnfläche ragt und die andere Rückstellfeder mit einem Ende in ein Loch in der rohrförmigen Halterung und mit dem anderen Ende in ein Loch in der Stirnfläche eingreift. Dadurch ist der glockenartige Körper mit der Stellwelle des Drehwiderstands zu der Leerlaufstellung hin rückstellbar, bis die Schwinge oder ein mit ihr verbundenes Teil an einen Anschlag anstösst. — Um in der der Leerlaufstellung entgegengesetzten Endstellung der Schwinge einen Kickdown-Schalter zu betätigen, mit dem eine andere Fahrstufe eines selbsttätigen Getriebes eingelegt werden kann, steht eine Stirnseite des glockenartigen Körpers in Wirkverbindung mit einer beweglichen Kontaktfeder des Kickdown-Schalters, der an dem Deckel des Gehäuses angebracht ist. Um den glockenartigen Körper in Kickdown-Stellung axial auszulenken, ist zwischen der einen Stirnseite des glockenartigen Körpers und der dieser zugewandten Gehäusewand eine Kugel angeordnet, die in einem der beiden relativ zueinander beweglichen Teile in einer Ausnehmung ortsfest gelagert ist und in eine kreisringsektorförmige Nut im anderen Teil eingreift. Dadurch wird der glockenartige Körper in axialer Richtung von der Gehäusewand weggedrückt, wenn die Kugel in der Kickdown-Stellung des glockenartigen Körpers aus der kreisringsektorförmigen Nut herausrollt. — Bei diesem bekannten Stellungsgeber ist die Herstellung einzelner Teile, insbesondere des glockenartigen Körpers, der sich praktisch über die gesamte Innenfläche des Gehäuses erstreckt und der an seiner Stirnseite mit der kreisringsektorförmigen Nut versehen ist, aufwendig. Dies gilt um so mehr, als das Wellenstück eine Einheit mit dem glockenartigen Körper bildet. Auch die rohrförmige Halterung mit einem Bund und zwei Abschnitten unterschiedlichen Durchmessers bedingt einen beträchtlichen Aufwand. Die Montage des Drehwiderstands in der Halterung und der Halterung zusammen mit den Federn in dem glockenartigen Körper gestalten sich relativ schwierig. Durch diese Baueinheit sind zwangsläufig die mechanischen Kennlinien — Rückstellkraft der Rückstellfedern über die Gaspedalbewegung und die elektrischen Kenngrössen — Widerstand des Drehwiderstands bzw. von diesem abgegebenes Signal in Abhängigkeit von der Fahrpedalstellung bzw. Schwingenstellung — festgelegt. Da für verschiedene Fahrzeugtypen unterschiedliche mechanische oder elektrische Kennlinien verlangt werden können, muss eine entsprechende Typenvielfalt produziert und auf Lager gehalten werden.

Weiterhin fehlt bei diesem bekannten Stellungsgeber ein Sicherheitsschalter, der insbesondere als Schliesser ausgebildet ist und geschlossen wird, wenn das Gaspedal aus seiner Leerlaufstellung bewegt wird. Ein derartiger Sicherheitsschalter ist bereits bekanntgeworden, um in Verbindung mit einem Stellgliedkontakt die Drehzahl eines Antriebsmotors herabzusetzen, wenn eine Störung vorliegt und der Antriebsmotor trotz Leerlaufstellung des Gaspedals hochläuft. Durch den Sicherheitsschalter wird also die Betriebssicherheit der Motorsteuerung erhöht.

Zu der vorliegenden Erfindung gehört daher die Aufgabe, einen Stellungsgeber mit Kickdown-Schalter und in Weiterbildung zusätzlich mit Endschaltern so auszubilden, dass er aus weitgehend vormontierten selbständigen Baugruppen in vielfältiger Weise den Bedarfsbedingungen anpassbar, leicht vormontiert, geprüft und zu dem vollständigen Stellungsgeber zusammengesetzt werden kann.

Diese Aufgabe wird durch die in dem kennzeichnenden Teil des Anspruchs 1 angegebenen Merkmale gelöst.

Dieser Stellungsgeber hat die wesentlichen Vorteile, dass die erste Baugruppe mit den im wesentlichen mechanischen Teilen, nämlich den Rückstellfedern, und mit einer als Betätigungsscheibe des Kickdown-Schalters und gegebenenfalls vorhandenen zusätzlichen Sicherheitsschalters als selbständige Einheit vormontiert und geprüft werden kann. Gleiches gilt für die zweite Baugruppe mit einem hohlen Isoliersockel, an dem die elektrischen Bauteile angebracht sind, insbesondere der Drehwiderstand in einem Hohlraum des Isoliersockels, sowie die Kontaktfedern des Kickdown-Schalters und gegebenenfalls des Sicherheitsschalters. Die Endmontage erfolgt in der Weise, dass zunächst die erste mechanische Baugruppe in das Gehäuse drehfest eingesteckt wird, wobei ein Abschnitt der Antriebswelle durch eine Bohrung im Gehäuseboden hindurchreicht. Daraufhin wird die zweite Baugruppe mit dem drehbaren Teil des Drehwiderstands koaxial zu der Antriebswelle in das Gehäuse eingesteckt und in diesem befestigt. Da während des Einsteckens gleichzeitig eine Kupplung zwischen dem drehbaren Teil, nämlich einer Stellwelle des Drehwiderstands und der Antriebswelle stattfindet und da die Schaltscheibe in die Soll-Lage gegenüber den Kontaktfedern gebracht ist, wird damit auch die betriebsmässige Kopplung der miteinander zusammenwirkenden Bauelemente der ersten und zweiten Baugruppe selbsttätig erreicht.

Durch die Weiterbildung des Stellungsgebers mit der wie angegeben ausgebildeten Federscheibe wird mit einfachen Mitteln eine Doppelfunktion ausgeübt, nämlich die Betätigung des Kickdown-Schalters unter gleichzeitiger Erhöhung der zu überwindenden Rückstellkraft, sowie die axiale Festlegung der ersten Baugruppe. Zur Deformierung der Federscheibe in axialer Richtung mittels der abgewinkelten Ansätze ist die Schaltscheibe gemäss Anspruch 3 ausgebildet.

Die Federscheibe dient nach Anspruch 4 weiterhin in zweckmässiger Weise zur Befestigung der zweiten, nämlich der elektrischen Baugruppe in dem Gehäuse, wodurch gleichzeitig die erste Baugruppe wie oben angegeben in axialer Richtung fixiert wird.

In besonderes vorteilhafter Weise kann die durch die Rückstellfedern ausgeübte Rückstellkraft nach Anspruch 5 voreingestellt werden. Es ist hierzu lediglich erforderlich, bei dem Einsetzen der ersten Baugruppe den Topf so weit zu verdrehen, dass bei an einem Anschlag anliegender Schwinge die gewünschte Rückstellkraft vorliegt, um dann den Topf mit dem sägezahnförmigen Abschnitt axial in die strukturierte Nut zu schieben und dort einzurasten.

Die Montage der Elemente der ersten Baugruppe auf der Antriebswelle wird wesentlich durch die auf diese schiebbare Hülse gemäss Anspruch 6 erleichtert. Die Hülse ist mit ihrem Innenabschnitt so ausgebildet, dass sie die Rückstellkraft der Rückstellfeder aufnimmt. Auf dem Aussenabschnitt sind insbesondere die Schaltscheibe und die die Schaltscheibe fixierenden Elemente angebracht. Ein verjüngtes Ende der Hülse ist zur drehbaren Lagerung der Hülse mit der Antriebswelle in einer Buchse der Federscheibe vorgesehen. Diese zweite Lagerstelle gegenüber der Lagerstelle der Antriebswelle in dem Boden des Gehäuses ist verhältnismässig reibungsarm. In die Verjüngung der Hülse ragt ferner ein Teil des Drehwiderstands mit der Stellwelle.

Diese Stellwelle ist nach Anspruch 7 zweckmässig mit einem Schuh ausgeformt, welcher mit einem durch die Hülse reichenden Stift eine Kupplung bildet. Der Stift ist ausserdem nach Anspruch 6 dafür vorgesehen, um die Antriebswelle mit der Hülse zu verbinden und auf dieser die Schaltscheibe in Umfangsrichtung festzulegen.

Die Hülse ist durch die Antriebswelle in dem Topf drehbar, der mit seinem gezahnten Abschnitt in dem Gehäuse festgelegt ist. Die Schaltscheibe dreht sich hingegen infolge der Stiftverbindung zusammen mit der Hülse. Um die zusammen mit der Antriebswelle drehbaren und nicht drehbaren Elemente in axialer Richtung zu positionieren, sind die Mittel nach Anspruch 8 vorgesehen. Durch sie wird bewirkt, dass der Boden des Topfes aussen zu der Schaltscheibe gedrückt wird, wobei zwischen der Schaltscheibe und dem Boden des Topfes eine die Reibkräfte aufnehmende Reibscheibe angeordnet ist.

Zweckmässige Einzelheiten der Ausbildung des hohlen Isoliersockels sind in den Ansprüchen 9, 10 und 12 angegeben.

Nach Anspruch 11 wird durch die auf den Drahtwiderstand steckbare Leiterplatte die Kontaktierung der elektrischen Elemente in dem Isoliersockel mit einem nach ausserhalb des Gehäuses führenden Kabel erleichtert.

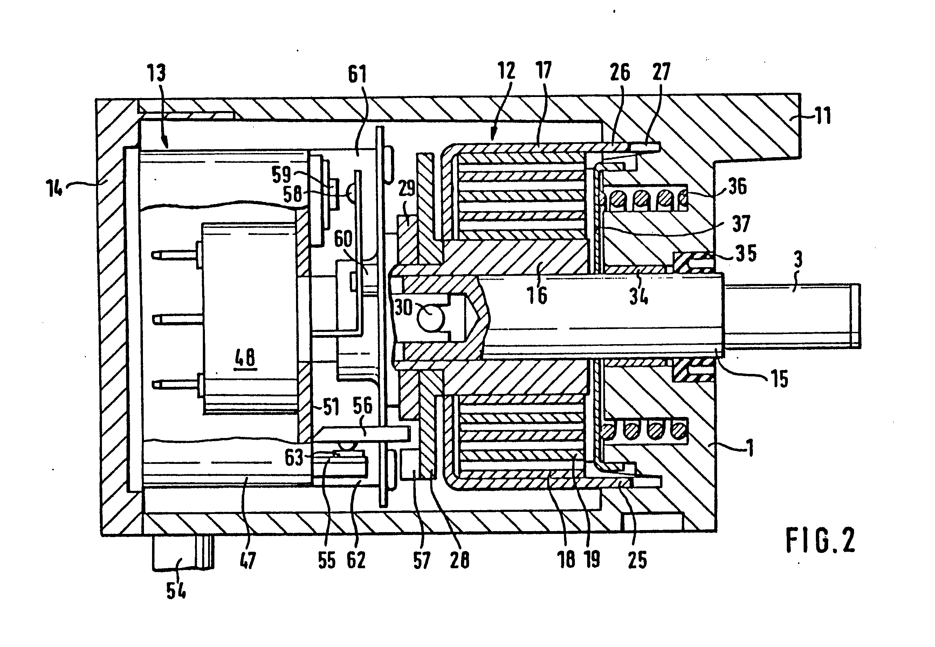

Die Erfindung wird im folgenden anhand einer Zeichnung mit 20 Figuren erläutert, in denen zwei Varianten des Stellungsgebers dargestellt sind. Mit Ausnahme der Fig. 2, die eine erste Variante darstellt, betreffen alle anderen Figuren die zweite Variante, wobei aber beide Varianten mit Ausnahme der unten angegebenen Unterschiede identisch sind.

Es zeigen:

Fig. 1 eine Draufsicht auf den Boden des montierten Stellungsgebers,

Fig. 2 einen Längsschnitt durch den montierten Stellungsgeber (ohne Schwinge),

Fig. 3 eine Seitenansicht, teilweise geschnitten, auf eine erste mechanische Baugruppe,

Fig. 4 eine Ansicht auf die Rückseite der ersten mechanischen Baugruppe,

Fig. 5 einen Längsschnitt durch eine Einzelheit der ersten Baugruppe, nämlich durch einen Topf,

Fig. 6 eine Draufsicht auf den Topf nach Fig. 5,

Fig. 7 eine Seitenansicht auf eine weitere Einzelheit der ersten Baugruppe, nämlich die Antriebswelle, teilweise geschnitten,

Fig. 8 einen Längsschnitt durch eine weitere Einzelheit der ersten Baugruppe, nämlich eine Hülse,

Fig. 9 eine Draufsicht auf eine weitere Einzelheit der ersten Baugruppe, nämlich eine Schaltscheibe,

Fig. 10 eine Seitenansicht auf die Schaltscheibe nach Fig. 9,

Fig. 11 ein Gehäuse im Längsschnitt,

Fig. 12 das Gehäuse in einer Ansicht von der Deckelseite nach innen,

Fig. 13 eine Draufsicht auf eine zweite, elektrische Baugruppe, in vereinfachter Darstellung,

Fig. 14 eine Seitenansicht auf die zweite Baugruppe nach Fig. 13,

Fig. 15 eine Einzelheit, nämlich einen Sicherheitsschalter aus den Fig. 13, 14,

Fig. 16 eine weitere Einzelheit aus Fig. 13, 14, nämlich eine zusammengesetzte Federscheibe in einer Seitenansicht,

Fig. 17 eine Draufsicht auf die Federscheibe,

Fig. 17a eine Seitenansicht auf die Federscheibe,

Fig. 18 einen Drehwiderstand, der in die zweite Baugruppe einsetzbar ist, in einer Seitenansicht,

Fig. 19 eine Draufsicht auf eine auf den Drehwiderstand aufsetzbare Leiterplatte und

Fig. 20 eine Anordnung des Kickdown-Schalters und des Sicherheitsschalters in schematischer Darstellung.

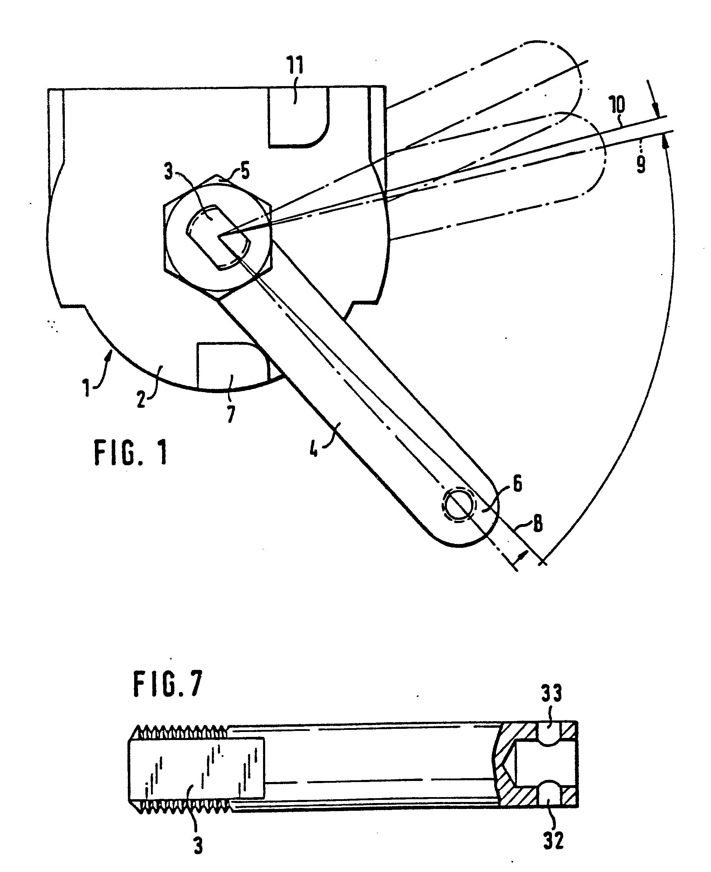

In Fig. 1 ragt aus einem Gehäuse 1, und zwar aus dessen Boden 2, ein abgeflachtes Ende 3 einer Antriebswelle heraus, welches mit einem Gewinde versehen ist. Auf dem abgeflachten Ende ist eine Schwinge 4 gesteckt und mit einer Schraube 5 gesichert. Am entgegengesetzten Ende der Schwinge steht von dieser ein Kugelkopf 6 vor, der zur Kopplung des Stellungsgebers mit einem Gaspedal vorgesehen ist. In der mit einer vollen Linie dargestellten Position befindet sich die Schwinge in der Leerlaufstellung und wird durch Rückstellfedern gegen einen aus dem Gehäuseboden ausgeformten ersten Anschlag 7 gedrückt. Die Schwinge ist durch Betätigung des Gaspedals entgegen dem Uhrzeigersinn auslenkbar. Wenn sie sich in der durch eine Mittellinie 8 der Schwinge angedeuteten Stellung befindet, wird ein Sicherheitsschalter betätigt. Der Sicherheitsschalter bleibt in dieser Lage über den weiteren Schwenkbereich der Schwinge. In der durch die strichpunktierte Mittellinie 9 angedeuteten Position wird die Vollaststellung erreicht. Über sie hinaus kann die Schwinge bis zur Kickdown-Stellung — durchgezogene Mittellinie 10 — weiterbewegt werden, in der ein Kickdown-Schalter geschlossen wird. Die Schwinge ist keinesfalls über einen zweiten Anschlag 11 hinaus schwenkbar.

In Fig. 2 ist in einem Längsschnitt des Gehäuses eine erste mechanische Baugruppe allgemein mit 12 bezeichnet und eine zweite, elektrische Baugruppe allgemein mit 13. Der diese Baugruppen beherbergende Innenraum des Gehäuses ist mit einem Deckel 14 abgeschlossen.

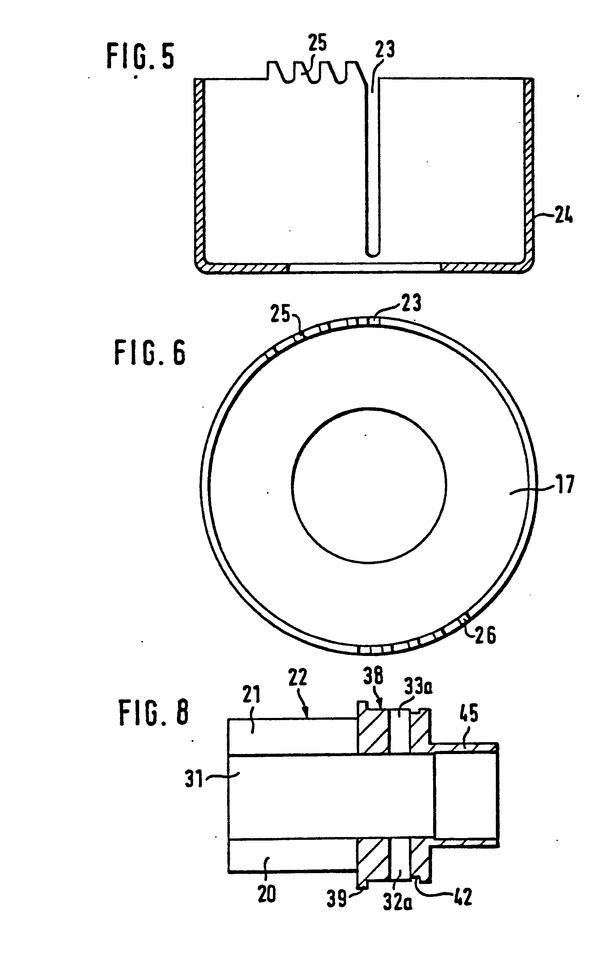

Zu der ersten Baugruppe gehört die Antriebswelle 15, eine auf sie aufgesteckte Hülse 16 und ein einseitig offener Topf 17. Der Topf dient zur Aufnahme zweier Flachbandspiralfedern als Rückstellfedern 18, 19, die aus Sicherheitsgründen paarweise vorgesehen sind. Ein Ende der Sicherheitsfedern ragt in je einen Längsschlitz 20 bzw. 21 an einem Innenabschnitt der Hülse, siehe auch Fig. 8. Das jeweils entgegengesetzte Ende der Rückstellfeder ist in je einen Längsschlitz in der Mantelfläche des Topfes eingehängt. In Fig. 5 ist ein Längsschlitz 23 des Topfes dargestellt, ein entsprechender Längsschlitz befindet sich in der gegenüberliegenden Wandstelle. Aus den Fig. 5 und 6 ist ferner erkennbar, wie in Verlängerung der Mantelfläche 24 aus dieser zwei sägezahnförmige Abschnitte 25 und 26 herausragen. Die sägezahnförmigen Abschnitte sind in eine strukturierte Nut 27 innen in dem Gehäuseboden einsteckbar, so dass sie entgegen der Rückstellkraft der Rückstellfedern in Umfangsrichtung den Topf festhalten.

Auf einen Aussenabschnitt der Hülse 16 lassen sich ferner eine Schaltscheibe 28 und eine Scheibe 29, insbesondere ein Springring, zur axialen Fixierung der Schaltscheibe aufbringen. Die Antriebswelle 15, die Hülse 16 und die Schaltscheibe 28 sind durch eine Loch/Stiftverbindung mit dem Stift 30 zu der ersten Baugruppe verbindbar. Die Ausbildung der Antriebswelle im Bereich der Verbindungsstelle mit einer axialen Bohrung 31 und radialen Bohrungen 32, 33 ergibt sich aus Fig. 7.

Die erste Baugruppe ist in den Boden des Gehäuses mit der Antriebswelle einschiebbar. Die Antriebswelle ist in einem Lager 34 drehbar und wird durch eine Radialdichtung 35 abgedichtet.

In der in Fig. 2 dargestellten Ausführungsform presst eine Feder 36 über eine Friktionsscheibe 37 die erste Baugruppe nach links, um eine gewünschte Ausrichtung zu der zweiten Baugruppe 13 zu gewährleisten.

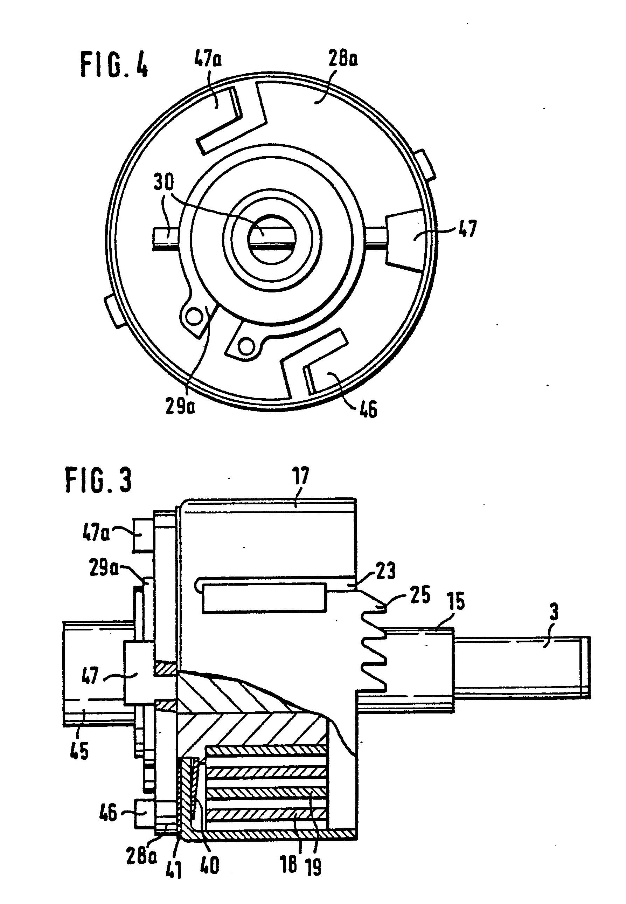

Die zweite Variante der ersten Baugruppe nach den Fig. 3, 4, 8 unterscheidet sich von derjenigen in Fig. 2 im wesentlichen durch eine andere Ausbildung der Hülse im Bereich des Aussenabschnitts 38, siehe Fig. 8, sowie durch eine andere Ausbildung der Mittel zur axialen Ausrichtung der ersten Baugruppe:

Gemäss Fig. 8 ist an der Hülse zwischen dem Innenabschnitt 22 und dem Aussenabschnitt 38 ein Bund 39 angeordnet. Gegen den Bund stützt sich eine Tellerfeder 40, siehe Fig. 3, ab, welche den Boden des Topfes 17 über eine zwischengeschaltete Friktionsscheibe 41 gegen die Schaltscheibe 28a drückt. Die Schaltscheibe 28a wird in axialer Richtung durch einen Springring 29a fixiert, welcher in eine Nut 42 in dem Aussenabschnitt eingreift.

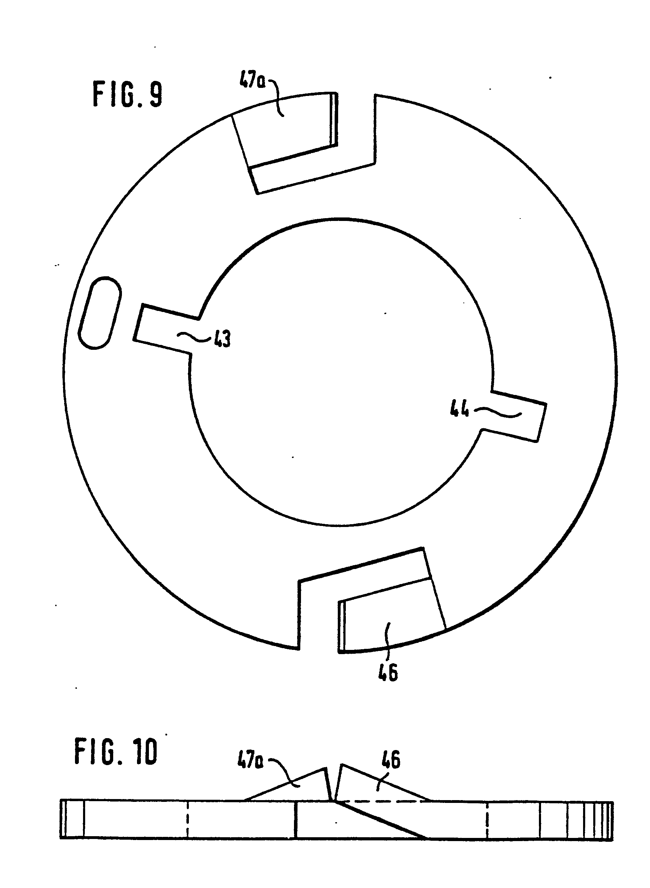

In Umfangsrichtung wird die Schaltscheibe 29a durch den Stift 30 gehalten, der in radiale Ausnehmungen 43, 44 in der Schaltscheibe hineinreicht, vergleiche Fig. 4 und 9.

Im Anschluss an die axiale Bohrung 31 der Hülse zur Aufnahme der Antriebswelle ist die Hülse mit einer Verjüngung 45 ausgeformt, deren Aussenumfang und Innenumfang mit Elementen der zweiten Baugruppe zusammenwirken.

Aus den Fig. 9 und 10, welche die Schaltscheibe vergrössert darstellen, sind noch zwei im spitzen Winkel hochgebogene Zungen 46 und 47a erkennbar, die in Verbindung mit einer noch zu besprechenden Flachfeder zur Betätigung des Kickdown-Schalters vorgesehen sind. Schliesslich ist in die Schaltscheibe eine Nocke 57 zur Betätigung eines Sicherheitsschalters eingelassen.

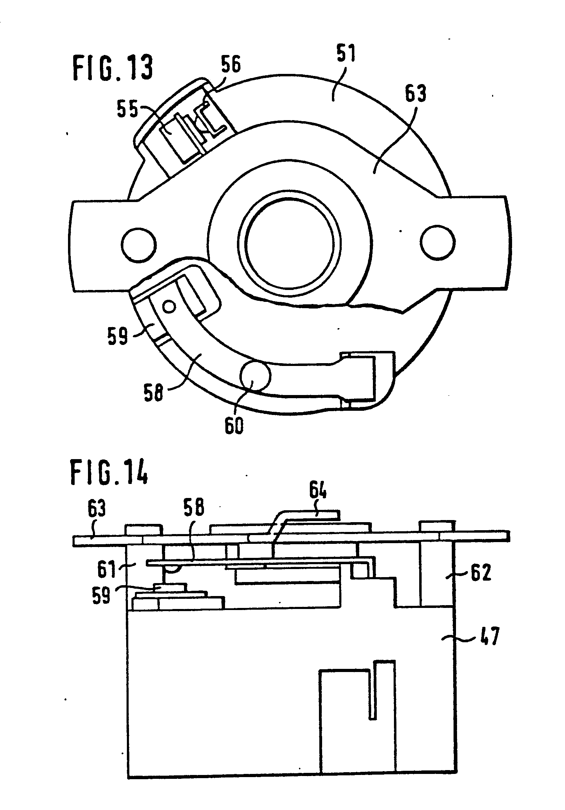

Im folgenden wird die zweite, elektrische Baugruppe 13 besprochen, die in Fig. 2 sowie in den Fig. 13 und 14 dargestellt ist.

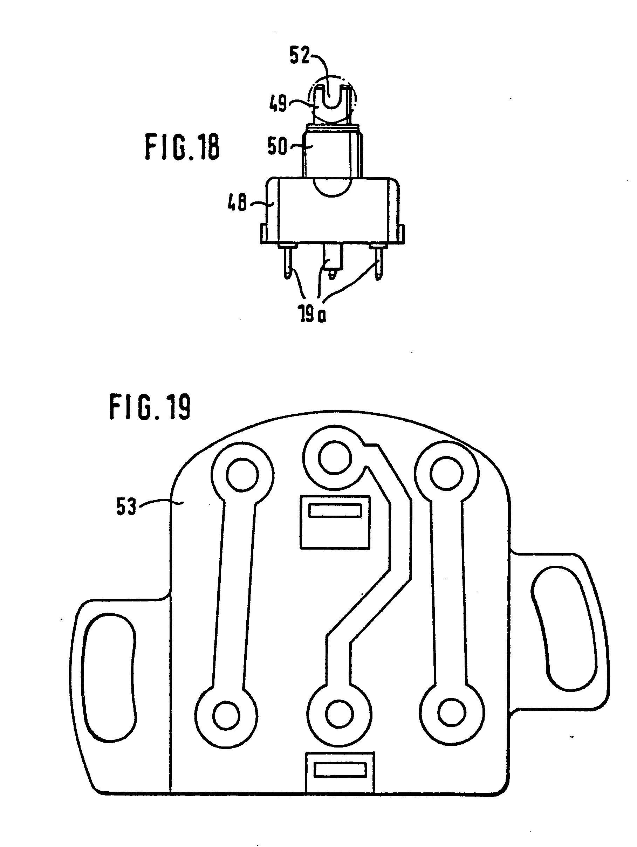

Die elektrische Baugruppe umfasst im wesentlichen einen Isoliersockel 47 mit einer in der Zeichnung nicht dargestellten annähernd quaderförmigen Ausnehmung, in die ein ähnliches quaderförmiges Gehäuse eines Drehwiderstands 48 eingesetzt werden kann. Dabei reichen die Stellwelle 49 und eine Buchse 50 des Drehwiderstands durch eine zentrale Öffnung in der Stirnseite 51 des Sockels hindurch. Die Stellwelle 49 ist zur Kupplung mit der Loch/Stiftverbindung mit dem Stift 30 der ersten Baugruppe als Schuh 52 ausgeformt. Die Ausbildung des Drehwiderstands ergibt sich am besten aus Fig. 18.

Auf die Kontaktstifte 19a des Drehwiderstands ist eine Leiterplatte 53 aufschiebbar, vergleiche Fig. 19. Die Leiterplatte dient zur Herstellung der Verbindung zwischen dem Drehwiderstand und einer nach ausserhalb des Gehäuses geführten Leitung 54, siehe Fig. 2.

In der Stirnseite des Isoliersockels sind ferner — axial orientiert — Kontaktfedern 55 und 56 des Sicherheitsschalters eingelassen. Die Kontaktfeder 56 ist nach der Endmontage durch eine Nocke 57 in Umfangsrichtung betätigbar, die auf der Schaltscheibe angebracht ist, vergleiche auch Fig. 2.

In der Stirnseite 51 des Isoliersockels sind weiterhin Kontaktfedern 58 und 59 des Kickdown-Schalters gehalten. Die Kontaktfeder 58 verläuft dabei in Umfangsrichtung parallel und im Abstand zu der Stirnseite, derart, dass sie durch eine axiale Bewegung betätigt werden kann. Hierzu ist die Kontaktfeder auf ihrer Aussenseite mit einem Kunststoff-Abstandsstück 60 versehen.

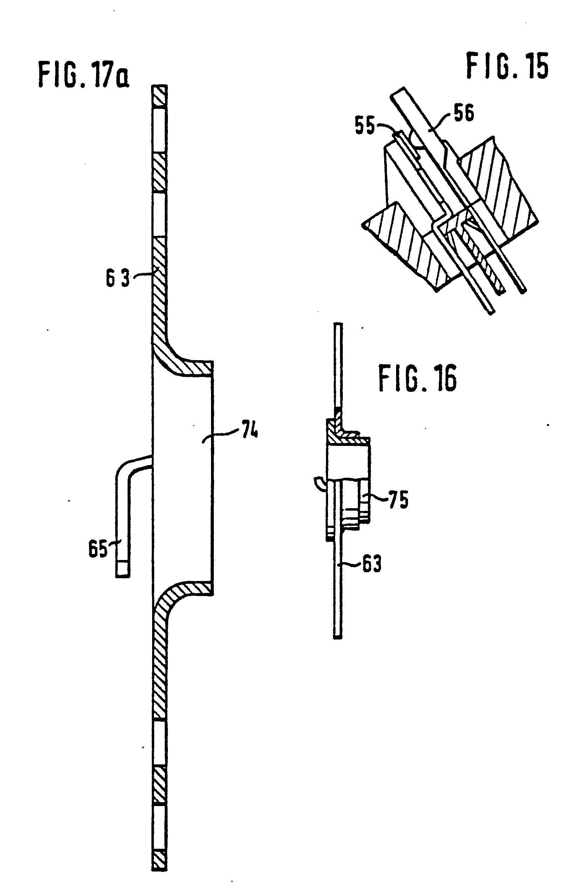

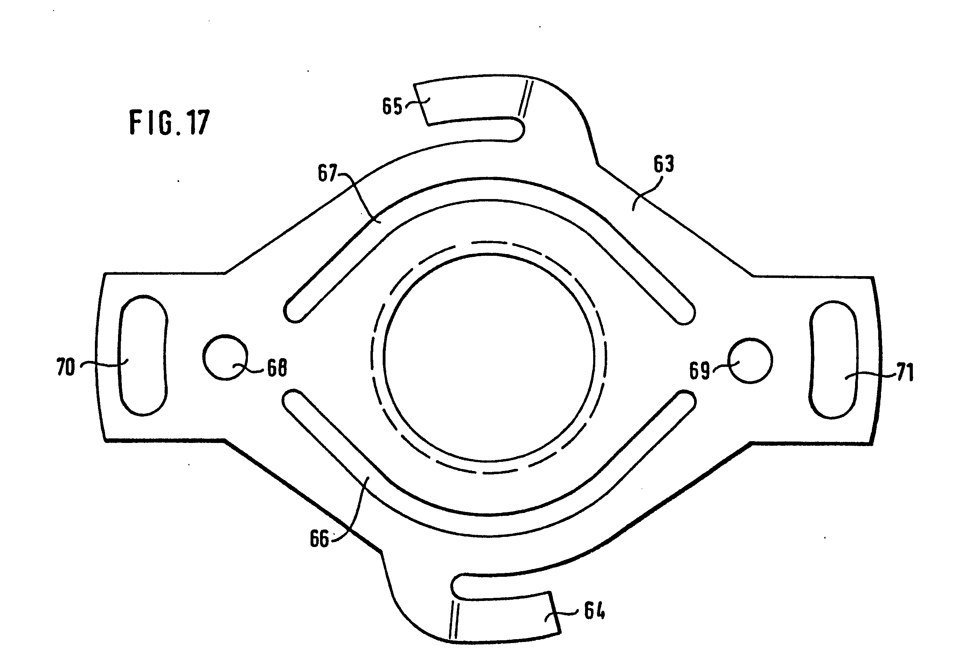

Auf angeformten Ansätzen 61 und 62, die von der Stirnseite des Isoliersockels abstehen, ist eine Federscheibe 63 befestigt. Die Federscheibe ist schematisch in den Fig. 2, 13 und 14 im montierten Zustand dargestellt, in Fig. 16 im einfachen zusammengesetzten Zustand und im einzelnen in den Fig. 17, 17a vergrössert.

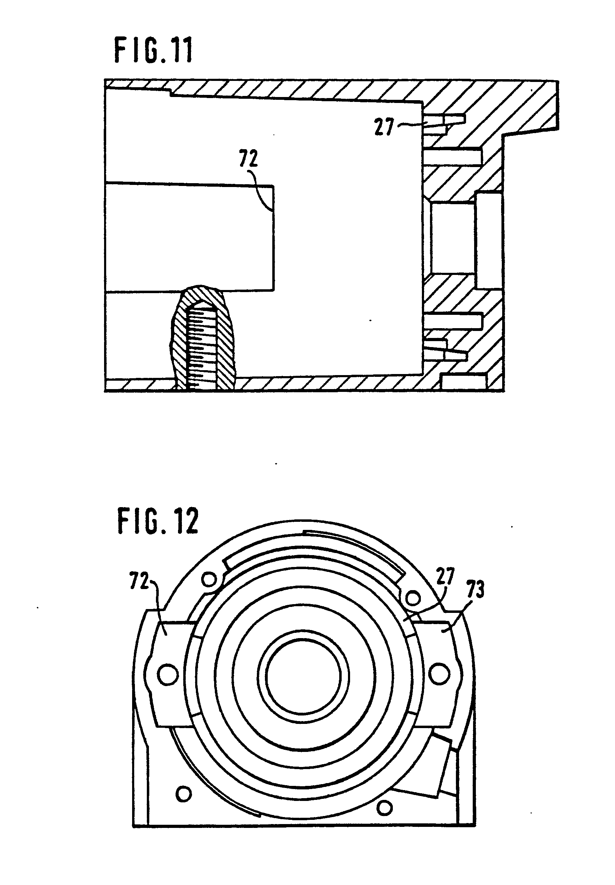

Wesentlich bei der Federscheibe sind zwei zweifach abgewinkelte axial zu ihr beabstandete Ansätze 64, 65, die radial gegenüberliegend angeordnet sind. Der Teil der Federscheibe, der die abgewinkelten Ansätze trägt, ist von dem zentralen Teil der Federscheibe durch längliche Schlitze 66 und 67 weitgehend getrennt, um bessere Federungseigenschaften zu ergeben. Die Federscheibe weist ferner Löcher 68, 69 zur Fixierung an dem Isoliersockel auf sowie Langlöcher 70 und 71 zur Befestigung in inneren Vorsprüngen 72, 73 des Gehäuses, vergleiche Fig. 12. In einer zentralen Öffnung 74 der Federscheibe ist eine Buchse 75 eingepresst, siehe Fig. 16, die zur Aufnahme der Verjüngung 45 der Hülse gemäss Fig. 8 bemessen ist.

Die abgewinkelten Ansätze 64 und 65 dienen dazu, die axiale Stellung der ersten zu der zweiten Baugruppe im montierten Zustand dadurch zu gewährleisten, dass die Ansätze zur Anlage auf der Schaltscheibe 28 gelangen. Abgesehen davon sind die Ansätze dazu eingerichtet, durch die abgewinkelten Zungen 46, 47a der Schaltscheibe in Richtung auf die Federscheibe gedrückt zu werden, wenn die Schaltscheibe in die Kickdown-Stellung gedreht wird. Dadurch wird der an die abgewinkelten Ansätze angrenzende Teil der Federscheibe über das Kunststoff-Abstandsstück 60 gegen die Kontaktfeder 58 gedrückt und der Kickdown-Schalter geschlossen.

Nachdem die erste, mechanische Baugruppe und die zweite, elektrische Baugruppe vormontiert und geprüft sind, werden diese in folgender Weise zur Endmontage verwendet:

Zunächst wird die erste, mechanische Baugruppe in das Gehäuse eingeschoben, so dass die Antriebswelle aus der Radialdichtung 35 mit ihrem abgeflachten Ende herausragt. Bevor die sägezahnförmigen Abschnitte 25, 26 in die strukturierte Nut 27 eingreifen, wird der Topf 17 unter Fixierung der Antriebswelle so verdreht, dass die gewünschte Rückstellkraft aus der Leerlaufstellung durch die Rückstellfedern 18, 19 erzielt wird. Hierzu kann die Antriebswelle durch die Schwinge an dem der Leerlaufstellung zugeordneten Anschlag festgehalten werden.

Wenn derart die Rückstellkraft eingestellt ist, wird die zweite, elektrische Baugruppe koaxial zu der ersten Baugruppe in das Gehäuseinnere eingeschoben, und zwar derart, dass die Verjüngung 45 der Hülse in die Buchse 75 hineinragt und die Stellwelle 49 mit dem Schuh 52 den Stift 30 der Loch/Stiftverbindung innerhalb der Antriebswelle umfasst. Damit wird eine Drehverbindung zwischen der Antriebswelle und der Stellwelle hergestellt. Die zweite, elektrische Baugruppe kann nun durch die Langlöcher 70 und 71 der Federscheibe hindurch an den Vorsprüngen 72 und 73 im Gehäuseinnern festgeschraubt werden, wodurch gleichzeitig mittels der abgewinkelten Ansätze 64, 65 der Federscheibe die erste, mechanische Baugruppe axial fixiert wird.

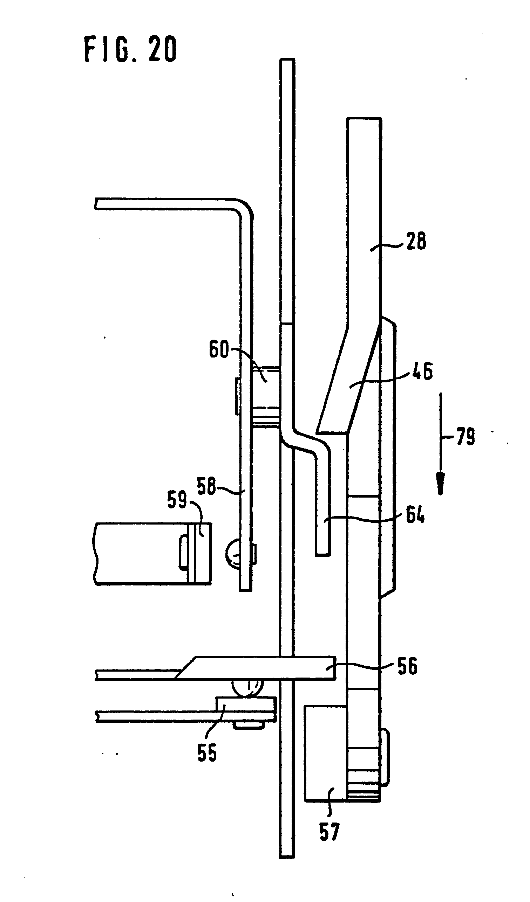

Die Betätigung des Sicherheitsschalters und des Kickdown-Schalters durch die Schaltscheibe ist in Fig. 20 schematisch dargestellt:

Bei einer Bewegung der Schaltscheibe 28, 28a in Pfeilrichtung 79 rückt zunächst die Nocke 57 von der Kontaktfeder 56 des Sicherheitsschalters ab, so dass sich dieser unter der Kraft der Kontaktfeder schliesst. Im Anschluss daran wird bei einer weiteren Drehung der Schaltscheibe zunächst kein weiterer Kontakt betätigt. Erst wenn die Kickdown-Stellung erreicht wird stösst die abgewinkelte Zunge 46 und die auf der Schaltscheibe 28 gegenüberliegende Zunge gegen den abgewinkelten Ansatz 64 bzw. den auf der Federscheibe gegenüberliegenden Ansatz 65. Der abgewinkelte Ansatz 64 drückt gegen das Kunststoff-Abstanddstück 60 und somit gegen die Kontaktzunge 58, welche dadurch in die Schliessstellung zu der Kontaktfeder 59 bewegt wird. Bei dem letztgenannten Vorgang tritt eine erhebliche Erhöhung des durch das Gaspedal zu überwindenden Widerstands infolge der Rückbiegung der abgewinkelten Ansätze 64 und 65 ein.

Bei der Rückstellung der Schaltscheibe 28 entgegen der Pfeilrichtung 79 durch die Kraft der Rückstellfedern wird zunächst der Kickdown-Schalter mit den Kontaktfedern 58, 59 geöffnet, während der Sicherheitsschalter noch geschlossen bleibt, bis die Nocke 57 kurz vor der Leerlaufstellung die Kontaktfeder 56 in Fig. 20 nach rechts von der Kontaktfeder 55 wegrückt.

Während der beschriebenen Drehung der Schaltscheibe liefert der Drehwiderstand ein elektrisches Signal — eine Spannung — deren Charakteristik entsprechend der Charakteristik des Drehwiderstands vorzugsweise proportional der Auslenkung der Schwinge ist.

Die Friktionsscheibe 37 in Fig. 2 bzw. 41 in Fig. 3 bewirkt aufgrund ihrer Reibanlage, dass bei konstanter Fahrt, bei der die Fusskraft und die entgegengesetzte Federkraft der Rückstellfedern 18, 19 gleich sind, ein Flattern aufgrund von Erschütterungen durch den Fahrbetrieb vermieden wird. Erst eine grössere Kraftdifferenz zwischen Fusskraft und Rückstellkraft, die z.B. durch Zurücknehmen der Fusskraft erfolgt, überwindet die Friktionskraft und führt zum Verstellen des Stellungsgebers.

Die Federkraft jeder einzelnen Rückstellfeder 18 und 19 ist auf jeden Fall so gross, dass sie die Friktionskraft überwindet. Somit ist sichergestellt, dass bei einem Ausfall einer der Rückstellfedern 18 oder 19 die jeweils andere Rückstellfeder noch eine einwandfreie Rückstellung des Stellungsgebers gewährleistet.

## Patentansprüche

1. Mit einem Gaspedal koppelbarer Stellungsgeber zum Steuern der Fahrgeschwindigkeit eines Kraftfahrzeugs durch elektrisches Übertragen der Bewegung des Gaspedals auf ein das Kraftstoff-Luft-Gemisch beeinflussendes Element, insbesondere eine Drosselklappe, mit einem Gehäuse (1) mit einem im wesentlichen hohlzylindrischen Innenraum, in dem in einer am Gehäuse befestigbaren Halterung ein elektrischer Drehwiderstand (48) mit einem seiner beiden relativ zueinander beweglichen Teile gegen Verdrehung gesichert angeordnet ist und mit seinem anderen Teil in axialer Richtung mit einem Körper (45) kuppelbar ist, der drehbar in dem hohlzylindrischen Innenraum gelagert und gegen die Kraft mindestens einer mit einem Ende in eine Ausnehmung des Körpers greifenden Rückstellfeder (18, 19) durch das Gaspedal verdrehbar ist sowie mit Betätigungsmitteln versehen ist, durch die bei Drehung des Körper um einen vorgegebenen Betrag ein mit dem Gehäuse in Verbindung stehender elektrischer Kickdown-Schalter (58, 59) in axialer Richtung betätigbar ist, dadurch gekennzeichnet, dass als vormontierbare selbständige Einheit eine erste Baugruppe (12) vorgesehen ist, die eine mit dem Gaspedal koppelbare Antriebswelle (15) aufweist, die durch einen die Rückstellfedern aufnehmenden Topf (17) hindurchreicht und gegenüber diesem drehbar ist, bei der die Rückstellfeder(n) mit je einem Ende in je einen Schlitz (23) des Topfes (17) hineinreicht (-reichen) und andererseits mit der Antriebswelle in Verbindung steht (stehen), ein gehäuseinneres Ende der Antriebswelle (15) mit dem drehbaren Teil (Stellwelle 49) des elektrischen Drehwiderstands (48) in axialer Richtung koppelbar ist und über diesem Ende mit der Antriebswelle (15) eine Schaltscheibe (28, 28a) zur Betätigung des Kickdown-Schalters (Kontaktfedern 59, 60) verbunden ist, dass als vormontierbare selbständige Einheit eine zweite Baugruppe (13) vorgesehen ist, die einen hohlen Isoliersockel (47) umfasst, dessen Hohlraum den Drehwiderstand (48) unverdrehbar aufnimmt und der als stirnseitige Halterung der Kontaktfedern (59, 60) des Kickdown-Schalters dient, derart, dass von dem Isoliersockel eine der Kontaktfedern, die mittels der Schaltscheibe (28, 28a) betätigbar ist, hervorsteht, und eine konzentrisch zur Antriebswelle angeordnete Federscheibe (63) mit zentraler Führungsbuchse (75) derart angebracht ist, dass durch die Stirnseite (51) des Isoliersockels ein den drehbaren Teil (Stellwelle 49) umfassender Teil (50) des Drehwiderstands (48) durchsteckbar ist, dass die erste Baugruppe (12) in das Gehäuse (1) drehfest einsteckbar ist, derart, dass ein Abschnitt (3) der Antriebswelle durch eine Bohrung im Gehäuseboden hindurchreicht und dass die zweite Baugruppe (13) mit dem drehbaren Teil

des Drehwiderstands (Stellwelle 49) koaxial zu der Antriebswelle (15) in das Gehäuse einsteckbar und in diesem befestigbar ist.

2. Stellungsgeber nach Anspruch 1, dadurch gekennzeichnet, dass die Federscheibe (28) mit zweifach abgewinkelten, axial zu ihr beabstandeten Ansätzen (64, 65) ausgebildet ist, die zur Fixierung der axialen Stellung der ersten Baugruppe (12) an der Schaltscheibe (28) anliegen und von denen einer derart in Umfangsrichtung zu der betätigbaren Kontaktfeder (58) und einer Zunge (46, 47a) auf der Schaltscheibe angeordnet ist, dass er in einer Endstellung der Antriebswelle die Kontaktfeder (58) unter gleichzeitiger Erhöhung der Rückstellkraft zu derjenigen der Rückstellfedern betätigt.

3. Stellungsgeber nach den Ansprüchen 1 und 2, dadurch gekennzeichnet, dass die Schaltscheibe (28, 28a) im spitzen Winkel zwei abgewinkelte Zungen (46, 47) aufweist, durch die die Ansätze (61, 62) der Federscheibe in der Kickdown-Stellung der Antriebswelle betätigbar sind.

4. Stellungsgeber nach einem der Ansprüche 1 bis 3, dadurch gekennzeichnet, dass die Federscheibe (63) Langlöcher (70, 71) zur Befestigung der zweiten Baugruppe (13) auf hervorstehenden Teilen (72, 73) der Innenwand des Gehäuses aufweist.

5. Stellungsgeber nach einem der Ansprüche 1 bis 4, dadurch gekennzeichnet, dass der Topf (17) in Verlängerung seiner Mantelfläche mindestens einen sägezahnförmigen Abschnitt (25, 26) aufweist, der in einstellbarer Drehstellung zu dem Gehäuse in eine strukturierte Nut (27) in der Innenfläche des Gehäusebodens einrastbar ist.

6. Stellungsgeber nach einem der Ansprüche 1 bis 5, dadurch gekennzeichnet, dass eine auf die Antriebswelle (15) schiebbare Hülse (16) einen Innenabschnitt (22) mit wenigstens einem Längsschlitz (20, 21) aufweist, der in dem Topf (17) mit der Rückstellfeder (18 bzw. 19) angeordnet ist, deren eines Ende in den Längsschlitz hineinreicht, einen Aussenabschnitt (38) zur Anbringung der Schaltscheibe und eine in eine Buchse (75) der Federscheibe einschiebbare und in dieser drehbare Verjüngung (46) aufweist, dass in das eine Ende der Hülse an der Verjüngung ein Teil (Buchse 50) des Drehwiderstands (48) mit der Stellwelle (49) einschiebbar ist und in das andere Ende der Hülse (16) an dem Innenabschnitt die Antriebswelle einschiebbar ist und dass die Hülse, die Antriebswelle und die Schaltscheibe durch einen radial durch die Hülse reichenden und aus diesem hervorragenden Stift (30) miteinander verbindbar sind.

7. Stellungsgeber nach Anspruch 6, dadurch gekennzeichnet, dass aus der Stellwelle (49) ein Schuh (52) ausgeformt ist, mit dem der Stift (30) beim Einschieben der Stellwelle in die Hülse (16) koppelbar ist.

8. Stellungsgeber nach Anspruch 6, dadurch gekennzeichnet, dass die Hülse (16) einen Bund (39) zwischen dem Innenabschnitt (22) und dem Aussenabschnitt (38) aufweist, gegen den sich eine Tellerfeder (40) abstützt, die einen Boden des Topfes über eine Friktionsscheibe (41) gegen die Schaltscheibe (28a) drückt, und dass an dem dem Bund abgewandten Ende des Aussenabschnitts eine Nut (42) ausgeformt ist, in die ein Springring (29a) zur axialen Fixierung der Schaltscheibe einlegbar ist.

9. Stellungsgeber nach einem der Ansprüche 1 bis 8, dadurch gekennzeichnet, dass der Isoliersokkel (47) zur Halterung von Kontaktfedern (55, 56) eines Sicherheitsschalters dient, von denen eine Kontaktfeder (56) axial von der Stirnseite der Halterung absteht und dass die abstehende Kontaktfeder (56) durch eine auf der Schaltscheibe angebrachte Nut (57) in Umfangsrichtung betätigbar ist.

10. Stellungsgeber nach einem der Ansprüche 1 bis 9, dadurch gekennzeichnet, dass die Schaltscheibe (28) an aus der Stirnseite des Isoliersockels ausgeformten Ansätzen (61, 62) angebracht ist.

11. Stellungsgeber nach einem der Ansprüche 1 bis 10, dadurch gekennzeichnet, dass in dem Isoliersockel (47) eine Leiterplatte (53) auf den Drehwiderstand aufsteckbar ist.

12. Stellungsgeber nach einem der Ansprüche 1 bis 11, dadurch gekennzeichnet, dass der Isoliersokkel (47) eine annähernd quaderförmige Ausnehmung zur Aufnahme des ähnlich geformten Drehwiderstands (48) aufweist.

**Claims**

1. Position signal emitter couplable to an accelerator pedal for controlling the speed of travel of a motor vehicle by electrical transmission of the movement of the accelerator pedal to an element influencing the fuel-air mixture, especially a throttle valve, with a housing (1) having a substantially hollow cylindrical interior space in which in a support fixable to the housing an electrical rotary-type variable resistor (48) is arranged secured against rotational movement with one of its two parts which are movable relatively to one another and with its other part is couplable axially with a body (45) which is mounted rotatably in the hollow cylindrical interior space and is rotatable by the accelerator pedal against the force of at least one restoring spring (18, 19) engaging with one end in an aperture of the body and also is provided with operating means whereby when the body rotates through a predetermined amount an electrical kickdown switch (58, 59) connected with the housing is operatable in the axial direction, characterised in that there is provided as a pre-assemblable independent unit a first component group (12) which has a drive shaft (15) couplable with the accelerator pedal, extending through a cup (17) accommodating the restoring springs and being rotatable relatively to said cup, wherein the restoring spring(s) extends (extend) in each case with one end into a respective slot (23) of the cup and on the other hand connects (connect) with the drive shaft, an end of the drive shaft (15) situated within the housing being couplable with the rotatable part (regulating shaft 49) of the electrical variable resistor (48) in the axial direction and there is connected via this end to the drive shaft (15) a switch disc (28, 28a) for the operation of the kickdown switch (contact springs 59, 60), that there is provided as a pre-assemblable independent unit a second component group (13) which has a hollow insulating base (47) whose hollow space houses the variable resistor (48) non-rotatably and which serves as an end support for the contact springs (59, 60) of the kickdown switch, in such a manner that one of the contact springs, which is operatable by means of the switch disc (28, 28a), projects from the insulating base, and a spring disc (63) with a central guide sleeve (75) and arranged concentrically with the drive shaft is so arranged that a part (50) of the variable resistor (48) comprehending the rotatable part (regulating shaft 49) is adapted to be put through the end face (51) of the insulating base, that the first component group (12) is insertable fast against rotation into the housing (1) in such a manner that a portion (3) of the drive shaft extends through a bore in the housing bottom, and that the second component group (13) is insertable coaxially with the drive shaft (15) into the housing with the rotatable part of the variable resistor (regulating shaft 49), and is fixable in the said housing.

2. Position signal emitter according to claim 1, characterised in that the spring disc (28) is constructed with projections (64, 65) which are bent-over twice and are spaced axially from said disc and which abut on the switch disc (28) for fixing the axial position of the first component group (12), and one of which is so arranged circumferentially with respect to the operatable contact spring (58) and a tongue (46, 47a) on the switch disc that in one end position of the drive shaft said projection operates the contact spring (58), at the same time increasing the restoring force relatively to that of the restoring springs.

3. Position signal emitter according to claims 1 and 2, characterised in that the switch disc (28, 28a) comprises at an acute angle two bent-over tongues (46, 47) whereby the projections (61, 62) of the spring disc are operatable in the kickdown position of the drive shaft.

4. Position signal emitter according to one of claims 1 to 3, characterised in that the spring disc (63) has elongated holes (70, 71) for securing the second component group (13) on projecting parts (72, 73) of the inner wall of the housing.

5. Position signal emitter according to one of claims 1 to 4, characterised in that the cup (17) comprises in prolongation of its generated surface at least one sawtooth-shaped portion (25, 26) which in an adjustable rotated position relatively to the housing is latchable into a structured groove (27) in the inner surface of the housing bottom.

6. Position signal emitter according to one of claims 1 to 5, characterised in that a sleeve (16) adapted to be slid on to the drive shaft (15) has an inner portion (22) with at least one longitudinal slot (20, 21) which is arranged in the cup (17) with the restoring spring (18 or 19) one end of which projects into the longitudinal slot, and has an outer portion (38) for the arranging of the switch disc, and a reduced-diameter portion (36) insertable into a sleeve (75) of the spring disc and rotatable in the latter, that a part (sleeve 50) of the variable resistor (48) is insertable with the regulating shaft (49) into one end of the sleeve, at the reduced-diameter portion, and the drive shaft is insertable into the other end of the sleeve (16), at the inner portion, and that the sleeve, the drive shaft and the switch disc are connectable to one another by a pin (30) which extends radially through the sleeve and projects therefrom.

7. Position signal emitter according to claim 6, characterised in that there is formed from the regulating shaft (49) a shoe (52) with which the pin (30) is couplable on insertion of the regulating shaft into the sleeve (16).

8. Position signal emitter according to claim 6, characterised in that the sleeve (16) has a collar (39) between the inner portion (22) and the outer portion (38), against which a disc spring (40) bears which presses an end of the cup through the agency of a friction disc (41) against the switch disc (28a), and that there is formed on that end of the outer portion which is remote from the collar a groove (42) into which a spring ring (29a) can be arranged for the axial securing of the switch disc.

9. Position signal emitter according to one of claims 1 to 8, characterised in that the insulating base (47) serves to support contact springs (55, 56) of a safety switch, and of these one contact spring (56) projects axially from the end face of the supporting means, and that the projecting contact spring (56) is operatable by a step (57) situated on the switch disc in the circumferential direction.

10. Position signal emitter according to one of claims 1 to 9, characterised in that the switch disc (28) is arranged on projections (61, 62) formed out of the end face of the insulating base.

11. Position signal emitter according to one of claims 1 to 10, characterised in that a conductor plate (53) is fittable on to the variable resistor in the insulating base (47).

12. Position signal emitter according to one of claims 1 to 11, characterised in that the insulating base (47) has an approximately parallelepipedic aperture for accommodating the simularly shaped variable resistor (48).

## Revendications

1. Indicateur de positions pouvant être accouplé à une pédale d'accélération pour commander la vitesse de déplacement d'un véhicule automobile, par une transmission électrique du mouvement de la pédale d'accélération à un élément influencant le mélange air-carburant, en particulier un papillon d'étranglement, comprenant un boîtier (1) présentant un espace interne sensiblement cylindrique et creux, dans lequel est logé un potentiomètre électrique (48) qui se trouve dans un support pouvant être fixé audit boîtier et est empêché de tourner par l'une de ses deux parties mobiles l'une par rapport à l'autre, son autre partie permettant son accouplement, dans le sens axial, à un corps (45) qui est monté à rotation dans l'espace interne cylindrique creux, peut être mis en rotation par la pédale d'accélération, à l'encontre de la force d'au moins un ressort de rappel (18, 19) en prise par une extrémité dans un évidement dudit corps, et est muni de moyens d'actionnement par l'intermédiaire desquels, lorsque ledit corps accomplit une rotation d'une valeur prédéterminée, un interrupteur électrique «kickdown» (58, 59) relié audit boîtier peut être actionné dans le sens axial, indicateur caractérisé par le fait qu'il est prévu, en tant qu'unité indépendante pouvant être préassemblée, un premier groupe constitutif (12) muni d'un arbre d'entraînement (15) qui peut être accouplé à la pédale d'accélération, traverse de part en part une cuvette (17) logeant les ressorts de rappel et peut tourner par rapport à cette cuvette, groupe dans lequel le ou les ressorts de rappel traverse(nt) par une extrémité respective une fente (23) correspondante de ladite cuvette (17) et est (sont) relié(s) d'autre part à l'arbre d'entraînement, une extrémité de l'arbre d'entraînement (15) située dans le boîtier peut être accouplée, dans le sens axial, à la partie rotative (arbre 49 de réglage) du potentiomètre électrique (48), et un disque (28, 28a) de commutation est relié, au-dessus de cette extrémité, à l'arbre (15) d'entraînement en vue d'actionner l'interrupteur «kickdown» (languettes élastiques 59, 60 de contact); par le fait prévu, en tant qu'unité autonome pouvant être préassemblée, un second groupe constitutif (13) présentant un culot isolant creux (47) dont la cavité loge de potentiomètre (48) sans aucune faculté de rotation, et qui sert de support frontal des languettes (59, 60) de contact de l'interrupteur «kickdown», de telle façon que l'une des languettes de contact pouvant être actionnée au moyen du disque (28, 28a) de commutation fasse saillie au-delà du culot isolant, et un disque élastique (63) à coussinet central de guidage (75) est installé, concentriquement à l'arbre d'entraînement, d'une manière telle qu'une partie (50) du potentiomètre (48), emprisonnant la partie rotative (arbre 49 de réglage), puisse être emboîtée à travers la face extrême (51) du culot isolant; par le fait que le premier groupe constitutif (12) peut être emboîté dans le boîtier (1) avec assujettissement en rotation, de manière qu'un tronçon (3) de l'arbre d'entraînement franchisse de part en part un trou pratiqué dans le fond de ce boîtier; et par le fait que le second groupe constitutif (13) peut être emboîté dans le boîtier par la partie rotative du potentiomètre (arbre 49 de réglage), coaxiallement à l'arbre d'entraînement (15), et peut être fixé dans ce boîtier.

2. Indicateur de positions selon la revendication 1, caractérisé par le fait que le disque élastique (23) est réalisé avec deux saillies (64, 65) qui sont coudées deux fois, sont distantes axialement de ce disque et sont appliquées contre le disque (28) de commutation en vue de déterminer rigidement la position axiale du premier groupe constitutif (12), saillies dont l'une est disposée, dans le sens périphérique, par rapport à la languette (58) de contact actionnable et par rapport à une languette (46, 47a) solidaire du disque de commutation, de telle sorte que, dans une position extrême de l'arbre d'entraînement, cette saillie actionne la languette (58) de contact avec accroissement concomitant de la force de rappel par rapport à celle des ressorts de rappel.

3. Indicateur de positions selon les revendications 1 et 2, caractérisé par le fait que le disque (28, 28a) de commutation présente deux languettes (46, 47) cintrées à angle aigu, par l'intermédiaire desquelles les saillies (61, 62) du disque élastique peuvent être actionnées lorsque l'arbre d'entraînement occupe la position «kickdown».

4. Indicateur de positions selon l'une quelconque des revendications 1 à 3, caractérisé par le fait que le disque élastique (63) présente des trous oblongs (70, 71) en vue de la fixation du second groupe constitutif (13) sur des parties saillantes (72, 73) de la face interne de la paroi du boîtier.

5. Indicateur de positions selon l'une quelconque des revendications 1 à 4, caractérisé par le fait que la cuvette (17) comporte, dans le prolongement de sa surface périphérique, au moins un tronçon (25, 26) en dents de scie qui, dans la position réglable prise par rotation par rapport au boîtier, peut être encliqueté dans une gorge structurée (27) ménagée dans la surface interne du fond du boîtier.

6. Indicateur de positions selon l'une quelconque des revendications 1 à 5, caractérisé par le fait qu'une douille (16) pouvant être enfilée sur l'arbre d'entraînement (15) possède un tronçon interne (22) percé d'au moins une fente longitudinale (20, 21) et situé dans cette cuvette (17) avec le ressort de rappel (18 ou 19) dont l'une des extrémités s'engage dans la fente longitudinale, un tronçon externe (38) assurant la mise en place du disque de commutation, ainsi qu'une partie (45) à paroi moins épaisse pouvant être enfoncée dans un coussinet (75) du disque élastique, dans lequel elle peut tourner; par le fait qu'une partie (coussinet 50) du potentiomètre (48) peut être insérée par l'arbre (49) de réglage dans l'une des extrémités de la douille située sur le rétrécissement de section, l'arbre d'entraînement pouvant être inséré dans l'autre extrémité de la douille (16), sur le tronçon interne; et par le fait que la douille, l'arbre d'entraînement et le disque de commutation peuvent être solidarisés les uns aux autres par l'intermédiaire d'une broche (30) qui traverse radialement ladite douille et fait saillie au-delà de cette dernière.

7. Indicateur de positions selon la revendication 6, caractérisé par le fait qu'un patin (52) est ménagé en saillie sur l'arbre de réglage (49), patin auquel la broche (30) peut être accouplée lors de l'insertion de l'arbre de réglage dans la douille (16).

8. Indicateur de positions selon la revendication 6, caractérisé par le fait que la douille (16) présente, entre le tronçon interne (22) et le tronçon externe (38), un collet (39) contre lequel est en appui une rondelle élastique (40) qui pousse un fond de la cuvette contre le disque (28a) de commutation, par l'intermédiaire d'un disque de friction (41); et par le fait que, à l'extrémité du tronçon externe tournée à l'opposé du collet, est ménagée une gorge (42) dans laquelle une bague élastique (29a) peut être insérée en vue de l'arrêt axial du disque de commutation.

9. Indicateur de positions selon l'une quelconque des revendications 1 à 8, caractérisé par le fait que le culot isolant (47) sert à la retenue de languettes élastiques (55, 56) de contact d'un d'interrupteur de sûreté, parmi lesquelles une languette (56) de contact fait saillie axialement au-delà de la face frontale du support; et par le fait que cette languette (56) de contact en saillie peut être actionnée, dans le sens périphérique, par une came (57) installée sur le disque de commutation.

10. Indicateur de positions selon l'une quelconque des revendications 1 à 9, caractérisé par le fait que le disque (28) de commutation est installé sur des saillies (61, 62) ménagées à l'écart de la face extrême du culot isolant.

11. Indicateur de positions selon l'une quelconque des revendications 1 à 10, caractérisé par le fait que, dans le culot isolant (47) une plaquette conductrice (53) peut être emboîtée sur le potentiomètre.

12. Indicateur de positions selon l'une quelconque des revendications 1 à 11, caractérisé par le fait que le culot isolant (47) présente un évidement approximativement rectangulaire, de façon à recevoir le potentiomètre (48) accusant une configuration similaire.

FIG. 1

FIG. 7

FIG.2

0 092 640

FIG. 4

47a    28a

30

47

29a    46

FIG. 3

47a

29a    17    23    25    15    3

47

45

46

28a    41    40    18    19

FIG. 5

25    23

24

FIG. 6

25    23

17

26

FIG. 8

21    22    38    33a    45

31

20    39    32a    42

FIG. 9

47a

43

44

46

FIG. 10

47a    46

## FIG.11

## FIG. 12

# FIG.13

56

51

55

63

59

58

60

# FIG.14

63

58

64

61

59

62

47

FIG. 17a

FIG. 15

FIG. 16

FIG.17

**FIG.18**

52

49

50

48

19 a

**FIG.19**

53

# FIG. 20